# EUROPÄISCHE PATENTANMELDUNG

(11) **EP 4 491 461 A1**
(43) Veröffentlichungstag der Anmeldung: **15.01.2025**
(21) Anmeldenummer: 24187516.0
(22) Anmeldetag: 09.07.2024
(51) Int. Cl.: B60R 9/06, B60R 9/10

(54) **TRAGEINHEIT FÜR EINEN FAHRRADTRÄGER**

(30) Priorität: 10.07.2023 PL 44552523
(71) Anmelder: ATERA GmbH, 88299 Leutkirch im Allgäu (DE)
(72) Erfinder: Sarlej, Kamil, 58-150 Strzegom (PL)
(74) Vertreter: Patentanwälte Ruff, Wilhelm, Beier, Dauster & Partner mbB

(57) **Zusammenfassung**

1. Trageinheit für einen Fahrradträger

2.1 Eine derartige Trageinheit für einen Fahrradträger aufweisend eine Halteeinrichtung, die eingerichtet ist zum Halten eines an einer Fahrradgabel montierten Montageabschnitts, insbesondere einer Steckachse, wobei die Halteeinrichtung ein feststehendes Halteelement, ein bewegliches Halteelement und eine zwischen dem feststehenden Halteelement und dem beweglichen Halteelement ausgebildete Halteaussparung aufweist, und wobei das bewegliche Halteelement relativ zu dem feststehenden Halteelement beweglich ist zwischen einer Öffnungsstellung, in welcher die Halteaufnahme zur Aufnahme des Montageabschnitts geöffnet ist, und einer Haltestellung, in welcher die Halteaufnahme zum Halten des Montageabschnitts geschlossen ist, ist bekannt.

2.2 Erfindungsgemäß weist die Trageinheit eine Spanneinrichtung auf, die eingerichtet ist zum Bewegen des beweglichen Halteelements zwischen der Öffnungsstellung und der Haltestellung und zum Verriegeln des beweglichen Halteelements in der Haltestellung, wobei die Spanneinrichtung einen Kniehebelmechanismus aufweist, der zum Bewegen und zum Verriegeln des beweglichen Halteelements mit demselben wirkverbunden und innerhalb einer Bewegungsebene beweglich ist.

2.3 Verwendung für einen Fahrradträger an einem Kraftfahrzeug

## Beschreibung

Die Erfindung betrifft eine Trageinheit für einen Fahrradträger, aufweisend eine Halteeinrichtung, die eingerichtet ist zum Halten eines an einer Fahrradgabel montierten Montageabschnitts, insbesondere einer Steckachse, wobei die Halteeinrichtung ein feststehendes Halteelement, ein bewegliches Halteelement und eine zwischen dem feststehenden Halteelement und dem beweglichen Halteelement ausgebildete Halteaussparung aufweist, und wobei das bewegliche Halteelement relativ zu dem feststehenden Halteelement beweglich ist zwischen einer Öffnungsstellung, in welcher die Halteaufnahme zur Aufnahme des Montageabschnitts geöffnet ist, und einer Haltestellung, in welcher die Halteaufnahme zum Halten des Montageabschnitts geschlossen ist.

Eine derartige Trageinheit ist aus der EP 3 838 678 B1 bekannt und weist eine als Verriegelungsmechanismus bezeichnete Halteeinrichtung mit einem feststehenden Halteelement (Verriegelungsbauteil) und einem beweglichen Halteelement (bewegliches Verriegelungsbauteil) auf. Die Halteeinrichtung der bekannten Trageinheit ist zum Halten eines an einer Fahrradgabel montierten Montageabschnitts eingerichtet. Das bewegliche Halteelement ist relativ zu dem feststehenden Halteelement zwischen einer Öffnungsstellung und einer Haltestellung beweglich. In der Öffnungsstellung ist eine zwischen den beiden Halteelementen ausgebildete Halteaufnahme zur Aufnahme des Montageabschnitts geöffnet. In der Haltestellung ist die Halteaufnahme zum Halten des Montageabschnitts geschlossen. Bei der bekannten Trageinheit ist die Halteeinrichtung dazu eingerichtet, durch Aufnehmen einer von dem Montageabschnitt übertragenen Kraft beim Einsetzen des Montageabschnitts in die Haltestellung verlagerbar zu sein.

Aufgabe der Erfindung ist es, eine Trageinheit der eingangs genannten Art bereitzustellen, die Vorteile gegenüber dem Stand der Technik bietet.

Diese Aufgabe wird dadurch gelöst, dass die Trageinheit eine Spanneinrichtung aufweist, die eingerichtet ist zum Bewegen des beweglichen Halteelements zwischen der Öffnungsstellung und der Haltestellung und zum Verriegeln des beweglichen Halteelements in der Haltestellung, wobei die Spanneinrichtung einen Kniehebelmechanismus aufweist, der zum Bewegen und zum Verriegeln des beweglichen Halteelements mit demselben wirkverbunden und innerhalb einer Bewegungsebene beweglich ist. Die erfindungsgemäße Lösung ermöglicht eine vereinfachte Bedienung der Trageinheit. Gleichzeitig werden ein einfacher Aufbau der Trageinheit und eine besonders zuverlässige Verriegelung des beweglichen Halteelements in der Haltestellung ermöglicht. Zu diesem Zweck ist die erfindungsgemäße Spanneinrichtung mit dem besagten Kniehebelmechanismus ausgestattet. Der Kniehebelmechanismus dient zum Bewegen und zum Verriegeln des beweglichen Halteelements. Der Kniehebelmechanismus ist mit dem beweglichen Halteelement wirkverbunden. Diese Wirkverbindung dient einer Übertragung der zum Bewegen und Verriegeln erforderlichen Kräfte auf das bewegliche Halteelement. Das bewegliche Halteelement ist bei unterschiedlichen Ausgestaltungen auf unterschiedliche Art zwischen der Öffnungsstellung und der Haltestellung beweglich. Bei einer Ausgestaltung ist das bewegliche Halteelement translatorisch beweglich. Bei einer weiteren Ausgestaltung ist das bewegliche Halteelement alternativ oder zusätzlich rotatorisch und/oder schwenkbeweglich verlagerbar. Die Bewegung des beweglichen Halteelements zwischen der Öffnungsstellung und der Haltestellung erfolgt bei einer Ausgestaltung in der Bewegungsebene des Kniehebelmechanismus. Bei einer weiteren Ausgestaltung erfolgt die besagte Bewegung in einer quer, vorzugsweise orthogonal, zu der Bewegungsebene des Kniehebelmechanismus orientierten weiteren Bewegungsebene (des beweglichen Halteelements).

In Ausgestaltung der Erfindung ist der Kniehebelmechanismus in der Haltestellung überstreckt, wobei die Verriegelung des beweglichen Halteelements durch die besagte Überstreckung bewirkt ist. Durch das Überstrecken des Kniehebelmechanismus in der Haltestellung des beweglichen Halteelements kann eine zuverlässige Verriegelung auf konstruktiv einfache Weise erreicht werden. Beispielsweise kann auf einen gesonderten Verriegelungsmechanismus verzichtet werden. "Überstreckt" meint, dass der Kniehebelmechanismus über einen Totpunkt hinausbewegt ist, d.h. über einen Punkt, ab welchem eine weitergehende Bewegung des Kniehebelmechanismus keine weitergehende Bewegung des beweglichen Halteelements in Richtung der Haltestellung verursacht.

In weiterer Ausgestaltung der Erfindung weist die Spanneinrichtung eine Ausgleichseinrichtung auf, mittels derer der Kniehebelmechanismus relativ zu dem feststehenden Halteelement in der Bewegungsebene begrenzt translatorisch beweglich elastisch abgestützt ist, wobei die elastische Abstützung einen Größenausgleich bewirkt, der ein Verriegeln des beweglichen Halteelements zum Halten unterschiedlich großer Montageabschnitte in unterschiedlich weit geschlossenen Haltestellungen des beweglichen Halteelements ermöglicht. Diese Ausgestaltung der Erfindung ermöglicht es, die Halteeinrichtung für unterschiedlich große Montageabschnitte zu verwenden, insbesondere für Steckachsen mit unterschiedlichen Durchmessern. Durch die Ausgleichseinrichtung kann unabhängig von der Größe des Montageabschnitts, beispielsweise dem Durchmesser der Steckachse, eine stets zuverlässige Verriegelung mittels des Kniehebelmechanismus erreicht werden. Zu diesem Zweck ist der Kniehebelmechanismus mittels der Ausgleichseinrichtung relativ zu dem feststehenden Halteelement begrenzt translatorisch beweglich elastisch abgestützt, wobei die Beweglichkeit in der Bewegungsebene des Kniehebelmechanismus gegeben ist. Durch die besagte elastische Abstützung ist eine Ausgleichsbewegung des Kniehebelmechanismus möglich. Diese Ausgleichsbewegung ermöglicht den besagten Größenausgleich, so dass auch für unterschiedlich große Montageabschnitte eine funktionsgemäße Kinematik des Kniehebelmechanismus gewährleistet ist. Der Kniehebelmechanismus greift einends an dem beweglichen Halteelement an und ist andernends an der Ausgleichseinrichtung abgestützt. Bei einer alternativen Ausgestaltung weist der Kniehebelmechanismus selbst die besagte Ausgleichsfunktion auf, indem beispielsweise wenigstens ein Hebel des Kniehebelmechanismus elastisch nachgiebig, insbesondere elastisch biegbar, gestaltet ist.

In weiterer Ausgestaltung der Erfindung weist die Ausgleichseinrichtung wenigstens eine in der Bewegungsebene elastisch bewegliche Ausgleichsfeder auf, die einends relativ zu dem feststehenden Halteelement abgestützt ist und andernends an dem Kniehebelmechanismus angreift. Die wenigstens eine Ausgleichsfeder dient der elastisch beweglichen Abstützung des Kniehebelmechanismus. Vorzugsweise ist die Ausgleichsfeder eine Wendelfeder. Bei einer alternativen Ausgestaltung weist die Ausgleichseinrichtung anstelle einer Ausgleichsfeder ein elastisch nachgiebiges Elastomerelement oder dergleichen auf.

In weiterer Ausgestaltung der Erfindung ist das bewegliche Halteelement innerhalb der Bewegungsebene des Kniehebelmechanismus relativ zu dem feststehenden Halteelement um eine erste Schwenkachse schwenkbeweglich an dem feststehenden Halteelement gelagert. Durch die Schwenkbeweglichkeit des beweglichen Halteelements in der Bewegungsebene des Kniehebelmechanismus und dessen Lagerung an dem feststehenden Halteelement kann ein nochmals vereinfachter Aufbau der Trageinheit erreicht werden. Die erste Schwenkachse ist orthogonal zu der Bewegungsebene des Kniehebelmechanismus. Bei dieser Ausgestaltung ist das bewegliche Halteelement in der Öffnungsstellung relativ zu dem feststehenden Halteelement aufgeschwenkt, d.h. um die erste Schwenkachse von dem feststehenden Halteelement wegbewegt. In der Haltestellung ist das bewegliche Halteelement um die erste Schwenkachse schwenkbeweglich auf das feststehende Halteelement zubewegt.

In weiterer Ausgestaltung der Erfindung ist das bewegliche Halteelement mittels des Kniehebelmechanismus um wenigstens 60°, bevorzugt wenigstens 80°, besonders bevorzugt um wenigstens 90° um die erste Schwenkachse schwenkbeweglich. Hierdurch wird eine ausreichend weite Öffnung der Halteaussparung in der Öffnungsstellung gewährleistet, so dass der Montageabschnitt, insbesondere die Steckachse, ohne ein Anstoßen an den beiden Halteelementen in die Halteaussparung eingesetzt werden kann. Die Bedienung der Trageinheit wird hierdurch nochmals komfortabler.

In weiterer Ausgestaltung der Erfindung greift ein Federelement an dem beweglichen Halteelement an, wobei das bewegliche Halteelement mittels des Federelements in Richtung der Öffnungsstellung vorgespannt ist. Die Vorspannung des beweglichen Halteelements mittels des Federelements in Richtung der Öffnungsstellung wirkt einer (gewollten oder ungewollten) Verlagerung in die Haltestellung entgegen. Hierdurch kann zum einen vermieden werden, dass das Halteelement bei einem Einbringen des Montageabschnitts noch vor Erreichen der Halteaussparung in Richtung der Haltestellung verlagert wird und hierdurch ungewollt die Halteaussparung versperrt. Zum anderen bewirkt die Vorspannung in Richtung der Öffnungsstellung eine spielfreie Bewegung mittels des Kniehebelmechanismus. Beispielsweise kann sich hierdurch eine verbesserte Qualitätsanmutung für den Bediener ergeben.

In weiterer Ausgestaltung der Erfindung weist der Kniehebelmechanismus einen Betätigungshebel und einen Stützhebel auf, wobei der Betätigungshebel um eine zweite Schwenkachse relativ zu dem beweglichen Halteelement schwenkbeweglich an dem beweglichen Halteelement gelagert ist, wobei der Stützhebel um eine dritte Schwenkachse relativ zu dem feststehenden Halteelement schwenkbeweglich mit dem feststehenden Halteelement verbunden ist, und wobei der Betätigungshebel und der Stützhebel um eine vierte Schwenkachse relativ zueinander schwenkbeweglich aneinander gelagert sind. Diese Ausgestaltung der Erfindung bietet einen besonders einfachen Aufbau des Kniehebelmechanismus. Bei einer bevorzugten Ausgestaltung ist der Betätigungshebel vorzugsweise zur (unmittelbaren) manuellen Betätigung des Kniehebelmechanismus eingerichtet. Beispielsweise kann der Betätigungshebel hierfür einen Betätigungsabschnitt aufweisen, der zum manuellen Umgreifen durch einen Bediener eingerichtet ist. Bei einer weiteren Ausgestaltung ist der Betätigungshebel stattdessen mit einem weiteren zur (unmittelbaren) manuellen Betätigung eingerichteten Hebel des Kniehebelmechanismus verbunden. Der Betätigungshebel ist vorzugsweise unmittelbar an dem beweglichen Halteelement gelagert. Der Stützhebel ist einerseits um die vierte Schwenkachse schwenkbeweglich an dem Betätigungshebel gelagert (und umgekehrt) und andererseits um die dritte Schwenkachse relativ zu dem feststehenden Halteelement schwenkbeweglich mit dem feststehenden Halteelement verbunden. Die besagte Verbindung des Stützhebels mit dem feststehenden Halteelement kann mittelbar oder unmittelbar sein. Die zweite Schwenkachse, die dritte Schwenkachse und die vierte Schwenkachse sind parallel. Die zweite Schwenkachse, die dritte Schwenkachse und die vierte Schwenkachse sind orthogonal zu der Bewegungsebene. Sofern die Spanneinrichtung eine Ausgleichseinrichtung gemäß der vorhergehenden Beschreibung aufweist, bewegen sich die zweite Schwenkachse, die dritte Schwenkachse und die vierte Schwenkachse innerhalb der Bewegungsebene bei einer Bewegung des Kniehebelmechanismus. Sofern keine Ausgleichseinrichtung vorhanden ist, sind lediglich die zweite Schwenkachse und die vierte Schwenkachse auf diese Weise beweglich, wohingegen die dritte Schwenkachse in Bezug auf die Bewegungsebene ortsfest ist.

In weiterer Ausgestaltung der Erfindung ist die dritte Schwenkachse mittels der Ausgleichseinrichtung an dem feststehenden Halteelement in der Bewegungsebene begrenzt translatorisch beweglich elastisch abgestützt. Folglich greift die Ausgleichseinrichtung bei dieser Ausgestaltung im Bereich der dritten Schwenkachse an dem Stützhebel an.

In weiterer Ausgestaltung der Erfindung sind die zweite Schwenkachse und die dritte Schwenkachse durch eine in der Bewegungsebene erstreckte gedachte Verbindungsgerade miteinander verbunden, wobei bei einer Bewegung von der Öffnungsstellung in die Haltestellung die vierte Schwenkachse sich über die Verbindungsgerade hinwegbewegt, wodurch eine Überstreckung des Kniehebelmechanismus bewirkt wird. Bei dieser Ausgestaltung erreicht der Kniehebelmechanismus seinen Totpunkt, sobald die vierte Schwenkachse die gedachte Verbindungsgerade erreicht (Schnittpunkt der Verbindungsgeraden der Bewegungsbahn der vierten Schwenkachse innerhalb der Bewegungsebene). Durch ein Hinwegbewegen der vierten Schwenkachse über die Verbindungsgerade wird der Kniehebelmechanismus überstreckt. Mit Erreichen des Totpunkts kann durch eine weitergehende Schwenkbewegung des Betätigungshebels keine weitergehende Bewegung des beweglichen Halteelements in Richtung der Haltestellung bewirkt werden.

In weiterer Ausgestaltung weist der Kniehebelmechanismus einen Fixierhebel auf, wobei der Fixierhebel um eine fünfte Schwenkachse relativ zu dem Betätigungshebel schwenkbeweglich an dem Betätigungshebel gelagert ist und einen Anschlagabschnitt aufweist, wobei der Anschlagabschnitt in der Haltestellung zur Fixierung des Kniehebelmechanismus auf den Stützhebel drückt, und wobei der Anschlagabschnitt mittels einer Schwenkbewegung des Fixierhebels um die fünfte Schwenkachse zum Aufheben der Fixierung von dem Stützhebel abhebbar ist. Der Fixierhebel ermöglicht eine konstruktiv einfache und zuverlässige Fixierung des Kniehebelmechanismus in der Haltestellung. Die besagte Fixierung kann alternativ oder zusätzlich zu einer etwaigen Überstreckung des Kniehebelmechanismus wirken. In der Haltestellung drückt der Anschlagabschnitt des Fixierhebels auf einen hierfür vorgesehenen Abschnitt des Stützhebels. Hierdurch wird die Beweglichkeit des Kniehebelmechanismus in der Bewegungsebene verhindert oder wenigstens gehemmt. Durch ein Abheben des Anschlagabschnitts von dem Kniehebelmechanismus wird die Beweglichkeit freigegeben, die Fixierung folglich aufgehoben. Um den Anschlagabschnitt in der Haltestellung von dem Stützhebel abheben zu können, ist der Fixierhebel um die fünfte Schwenkachse schwenkbeweglich an dem Betätigungshebel gelagert. Die fünfte Schwenkachse ist vorzugsweise orthogonal zu der Bewegungsebene. Die fünfte Schwenkachse ist vorzugsweise parallel zu der zweiten Schwenkachse, der dritten Schwenkachse und/oder der vierten Schwenkachse des Kniehebelmechanismus.

In weiterer Ausgestaltung der Erfindung weist die Spanneinrichtung ein abschließbares Schloss auf, wobei das Schloss an dem Betätigungshebel angeordnet ist und in einem abgeschlossenen Zustand mit dem Stützhebel zusammenwirkt, um die Beweglichkeit des Kniehebelmechanismus zu blockieren. Das abschließbare Schloss wirkt einer ungewollten Manipulation der Spanneinrichtung entgegen. Zu diesem Zweck kann die Beweglichkeit des Kniehebelmechanismus mittels des abschließbaren Schlosses blockiert werden. Das Schloss ist an dem Betätigungshebel angeordnet und kann in der Haltestellung mit einem hierfür vorgesehenen Abschnitt des Stützhebels in Eingriff gebracht werden, d.h. abgeschlossenen werden. Durch diesen Eingriff wird eine mechanische Wirkverbindung zwischen dem Betätigungshebel und dem Stützhebel erreicht, die eine Bewegung in Richtung der Öffnungsstellung verhindert. Diese Wirkverbindung kann durch ein Aufschließen des Schlosses aufgehoben werden. Das abschließbare Schloss kann jede geeignete Bauart aufweisen.

In weiterer Ausgestaltung der Erfindung ist das bewegliche Halteelement ausgehend von der Öffnungsstellung in eine Ruhestellung beweglich, in welcher die Halteaufnahme zum, insbesondere vorübergehenden, Halten des Montageabschnitts wenigstens teilweise und/oder weniger weit als in der Haltestellung geschlossen ist, und in welcher der Kniehebelmechanismus mittels einer Arretiereinrichtung gegen eine ungewollte Verlagerung des beweglichen Halteelements in Richtung der Öffnungsstellung lösbar arretiert ist. Bei dieser Ausgestaltung der Erfindung ist die besagte Ruhestellung als weitere definierte Stellung zusätzlich zu der Öffnungsstellung und der Haltestellung vorgesehen. Die Ruhestellung dient einem lediglich vorübergehenden Halten des Montageabschnitts und erlaubt eine deutlich vereinfachte Befestigung der Fahrradgabel und damit des gesamten Fahrrads. Bei dieser Ausgestaltung der Erfindung kann der eigentliche Befestigungsvorgang des Fahrrads in der Ruhestellung zeitweise durch den Bediener unterbrochen und später fortgesetzt werden, ohne dass ein Umfallen des zu befestigenden Fahrrads zu befürchten steht. Hierdurch ergeben sich eine maßgeblich vereinfachte Bedienung der Trageinheit, d.h. ein vereinfachter Befestigungsvorgang, und eine verbesserte Sicherheit bei der Befestigung des Fahrrads. Die Ruhestellung ist eine definierte Zwischenstellung zwischen der Öffnungsstellung und der Haltestellung. Dabei ist die Halteaufnahme der Halteeinrichtung in der Ruhestellung wenigstens teilweise und/oder weniger weit als in der Haltestellung geschlossen. Auf diese Weise erlaubt die Ruhestellung eine vorübergehende Halterung des Montageabschnitts, die auch als Vorfixierung bezeichnet werden kann. Die Ruhestellung ist nicht für den eigentlichen Transport des Fahrrads vorgesehen. Hierfür dient die Haltestellung. Der Kniehebelmechanismus ist in der Ruhestellung mittels der Arretiereinrichtung arretiert. Die Arretierung wirkt in Richtung der Öffnungsstellung. Vorzugsweise wirkt die Arretierung ausschließlich in Richtung der Öffnungsstellung und damit nicht zusätzlich in Richtung der Haltestellung. Die Arretierung ist lösbar.

In weiterer Ausgestaltung der Erfindung ist das bewegliche Halteelement unter Einwirkung einer Gewichtskraft der zu haltenden Fahrradgabel ausgehend von der Öffnungsstellung in die Ruhestellung verlagerbar. Hierdurch wird eine noch weitere Vereinfachung des Befestigungsvorgangs erreicht. Denn das bewegliche Halteelement kann bei dieser Ausgestaltung der Erfindung allein durch die Gewichtskraft der auf das bewegliche Halteelement wirkenden Fahrradgabel ausgehend von der Öffnungsstellung in die Ruhestellung verlagert werden. Die Halteeinrichtung und/oder die Spanneinrichtung sind dementsprechend eingerichtet. Da die Verlagerung in die Ruhestellung allein unter Einwirkung der Gewichtskraft erfolgt, braucht der Bediener nicht zusätzlich für diesen Zweck an der Trageinheit anzugreifen. Vielmehr kann er oder sie beide Hände an dem zu befestigenden Fahrrad belassen, um die Fahrradgabel, genauer: den Montageabschnitt, auf, an und/oder in dem beweglichen Halteelement abzustellen, um es in die Ruhestellung zu verlagern. Das bewegliche Halteelement, die Halteeinrichtung und/oder die Spanneinrichtung ist derart eingerichtet, dass die besagte Verlagerung in Richtung der Ruhestellung selbsttätig unter einer Gewichtskraft von maximal 60 N, bevorzugt maximal 50 N, weiter bevorzugt maximal 40 N, weiter bevorzugt maximal 30 N, weiter bevorzugt maximal 20 N, erfolgt. Vorzugsweise ist das bewegliche Halteelement auch bei dieser Ausgestaltung in Richtung der Öffnungsstellung vorgespannt, beispielsweise mittels eines Federelements, wie es bereits im Zusammenhang mit einer der vorhergehenden Ausführungsformen erläutert wurde. Weiter vorzugsweise ist eine Federrate des besagten Federelements auf die Gewichtskraft der Fahrradgabel abgestimmt, um trotz Vorspannung in Richtung der Öffnungsstellung eine selbsttätige Verlagerung in Richtung der Ruhestellung und Einwirkung der Gewichtskraft zu erlauben.

In weiterer Ausgestaltung der Erfindung weist die Arretiereinrichtung einen fest mit dem Fixierhebel verbundenen ersten Arretierabschnitt und einen fest mit dem Stützhebel verbundenen zweiten Arretierabschnitt auf, wobei der erste Arretierabschnitt und der zweite Arretierabschnitt in der Ruhestellung in Richtung der Öffnungsstellung formschlüssig zusammenwirken, insbesondere wobei der Formschluss mittels einer Betätigung des Fixierhebels und/oder einer Schwenkbewegung des Fixierhebels um die fünfte Schwenkachse aufhebbar ist. Bei dieser Ausgestaltung der Erfindung kommt insbesondere dem Fixierhebel eine besonders vorteilhafte Mehrfachfunktion zu. Denn zum einen dient der Fixierhebel, wie bereits erläutert, der Fixierung des Kniehebelmechanismus in der Haltestellung. Zusätzlich dient der Fixierhebel bei dieser Ausgestaltung der Erfindung der Arretierung der Ruhestellung. Zu diesem Zweck weist der Fixierhebel den ersten Arretierabschnitt auf, der in der Ruhestellung lösbar formschlüssig mit dem zweiten Arretierabschnitt zusammenwirkt. Der zweite Arretierabschnitt ist bei dieser Ausgestaltung der Erfindung fest mit dem Stützhebel verbunden. Hierdurch ergeben sich weitere Vereinfachungen im Aufbau der Trageinheit. Vorzugsweise ist der erste Arretierabschnitt ein integraler Abschnitt des Fixierhebels. Vorzugsweise ist der zweite Arretierabschnitt ein integraler Abschnitt des Stützhebels. Der erste Arretierabschnitt und der zweite Arretierabschnitt können grundsätzlich auf jede für den vorliegenden Zweck geeignete Weise gestaltet sein. Bevorzugt ist der erste Arretierabschnitt in Form eines Hakens gestaltet und der zweite Arretierabschnitt ist in Form eines Hinterschnitts gestaltet, an welchem der Haken in der Ruhestellung lösbar verhakt ist. Die Erfindung betrifft zudem einen Fahrradträger mit einer Trageinheit gemäß der vorhergehenden Beschreibung. Vorzugsweise ist der Fahrradträger ein Dachträger für einen Personenkraftwagen. Bei einer bevorzugten Ausgestaltung weist der Fahrradträger eine längserstreckte Tragschiene auf, wobei die Trageinheit einends der Tragschiene an derselben befestigt ist. Die Tragschiene ist vorzugsweise auf Querträgern des Fahrradträgers abgestützt. Die besagten Querträger sind auf eine dem Fachmann bekannte Weise an dem Kraftfahrzeug, insbesondere dem Kraftfahrzeugdach, befestigt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivansicht eine Ausführungsform eines erfindungsgemäßen Fahrradträgers, der mit einer Ausführungsform einer erfindungsgemäßen Trageinheit versehen und zum Transport eines Fahrrads auf einem Dach eines Personenkraftwagens montiert ist,
- Fig. 2: in schematischer Perspektivansicht die Trageinheit des Fahrradträgers nach Fig. 1,
- Fig. 3: eine schematische Frontansicht der Trageinheit nach Fig. 2,

- Fig. 4 bis 9: schematische Längsschnitte der Trageinheit nach den Fig. 2 und 3, wobei eine Halteeinrichtung und eine Spanneinrichtung der Trageinheit unterschiedliche Stellungen zwischen einer geschlossenen Haltestellung (Fig. 4) und einer geöffneten Öffnungsstellung einnehmen (Fig. 9),
- Fig. 10, 11, 12: weitere Längsschnitte der Trageinheit in unterschiedlichen Stellungen beim Halten eines Montageabschnitts einer ersten Größe,
- Fig. 13: ein weiterer Längsschnitt der Trageinheit beim Halten eines Montageabschnitts einer zweiten Größe,
- Fig. 14: eine weitere Ausführungsform einer erfindungsgemäßen Trageinheit in einem schematischen Längsschnitt entsprechend den Fig. 4 bis 13, wobei die Halteeinrichtung und die Spanneinrichtung die Öffnungsstellung einnehmen,
- Fig. 15: die Trageinheit nach Fig. 14, wobei die zu haltende Fahrradgabel mit der Halteeinrichtung zusammenwirkt,
- Fig. 16: die Trageinheit nach den Fig. 14 und 15, wobei Halteeinrichtung und die Spanneinrichtung eine arretierte Ruhestellung einnehmen, und
- Fig. 17: die Trageinheit nach den Fig. 14 bis 16, wobei Halteeinrichtung und die Spanneinrichtung die Haltestellung einnehmen.

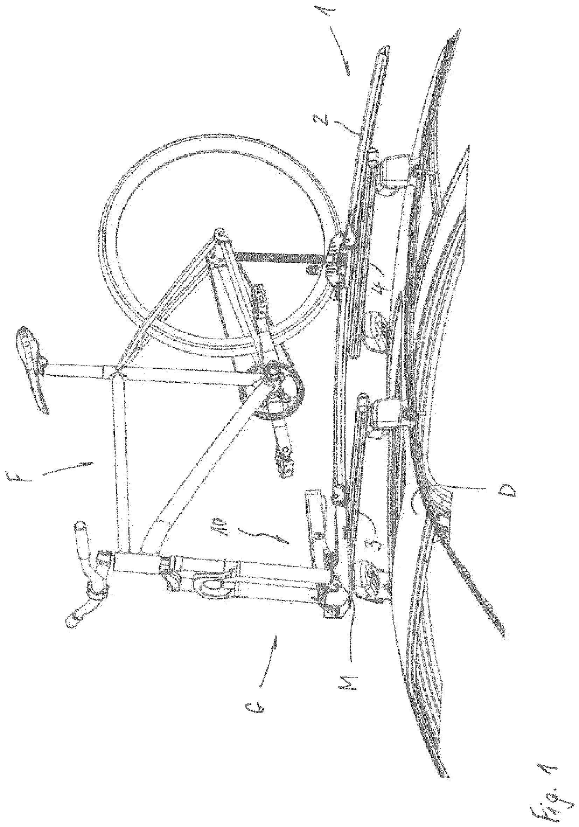

Gemäß Fig. 1 ist ein Fahrradträger 1 auf einem Fahrzeugdach D eines abschnittsweise gezeigten Personenkraftwagens (ohne Bezugszeichen) montiert und dient dem Tragen eines Fahrrads F.

Bei der gezeigten Ausführungsform ist der Fahrradträger 1 folglich in Form eines Dachfahrradträgers gestaltet. Bei einer in den Figuren nicht gezeigten Ausführungsform ist der Fahrradträger als Heckfahrradträger ausgeführt.

Bei der gezeigten Ausführungsform weist der Fahrradträger 1 eine Tragschiene 2, einen vorderen Querträger 3 und einen hinteren Querträger 4 auf. Die beiden Querträger 3, 4 sind auf eine dem Fachmann bekannte Weise an dem Fahrzeugdach D befestigt. Die beiden Querträger 3, 4 sind vorliegend parallel zu einer Querachse des Fahrzeugdachs D ausgerichtet. Die Tragschiene 2 ist zwischen dem vorderen Querträger 3 und dem hinteren Querträger 4 längserstreckt und an dem vorderen Querträger 3 sowie an dem hinteren Querträger 4 befestigt. Die Tragschiene 2 ist vorliegend parallel zu einer Längsachse des Fahrzeugdachs D.

Vorliegend weist der Fahrradträger 1 lediglich eine einzelne Tragschiene 2 auf. Es versteht sich, dass der Fahrradträger auch mit mehreren parallel erstreckten Tragschienen versehen sein kann, so dass beispielsweise zwei oder drei Fahrräder gleichzeitig gehalten und transportiert werden können.

Der Fahrradträger 1 weist zudem eine Trageinheit 10 auf. Die Trageinheit 10 dient einer lösbaren Befestigung des Fahrrads F an dem Fahrradträger 1.

Bei der gezeigten Ausführungsform ist die Trageinheit 10 frontseitig an der Tragschiene 2 angeordnet und mit derselben verbunden. Dabei dient die Trageinheit 10 der lösbaren Befestigung einer Fahrradgabel G des Fahrrads F. Bei einer in den Figuren nicht gezeigten Ausführungsform dient die Trageinheit stattdessen zur lösbaren Befestigung der hinteren Ausfallenden (ohne Bezugszeichen) des Fahrrads und ist zu diesem Zweck heckseitig an der Tragschiene angeordnet und fest mit dieser verbunden.

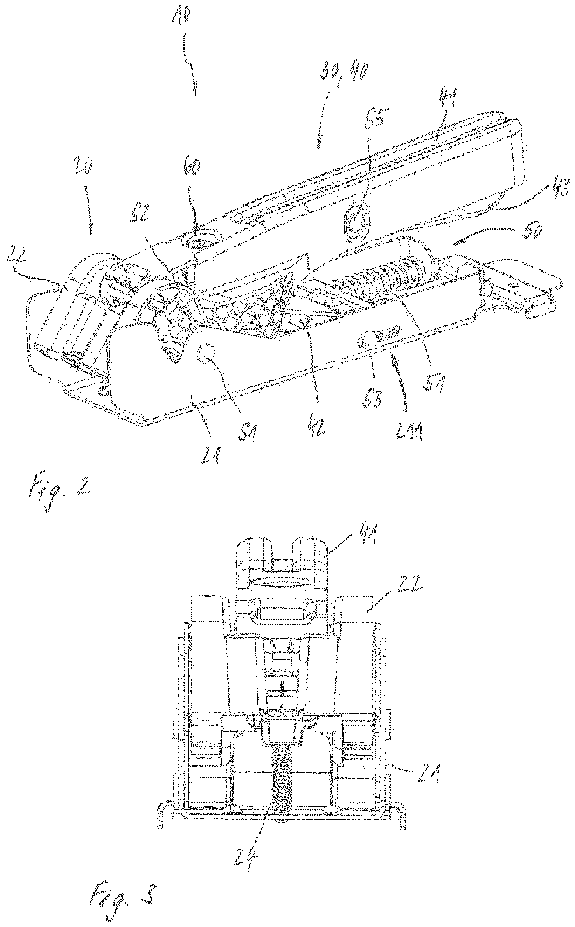

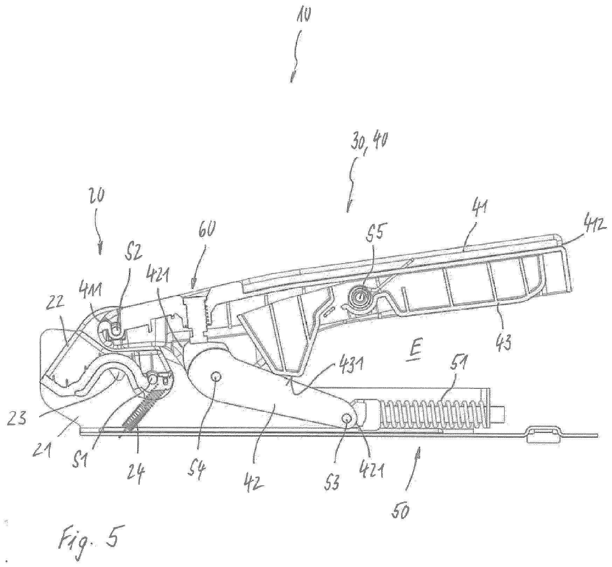

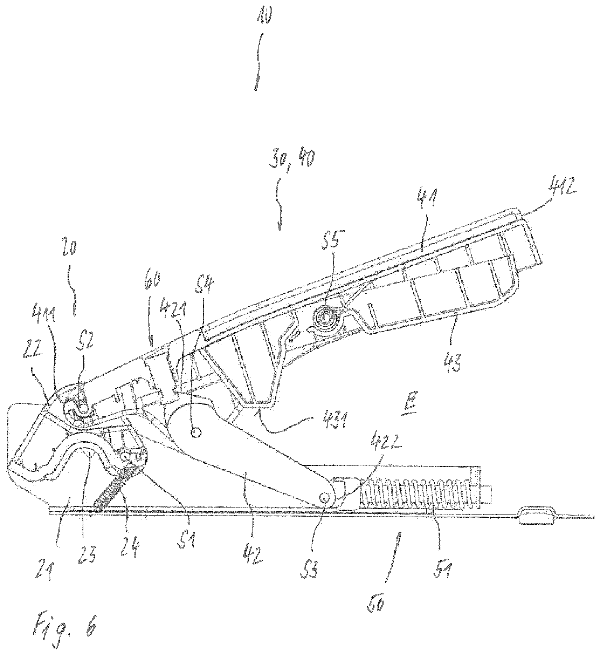

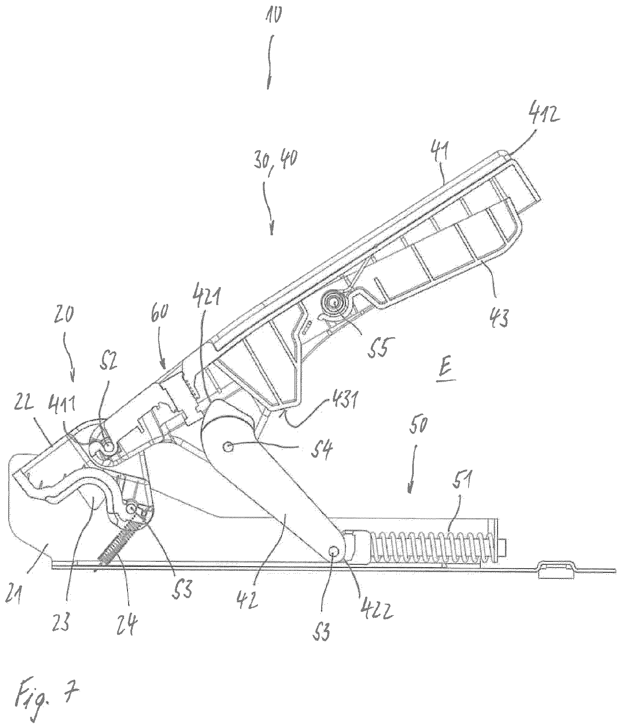

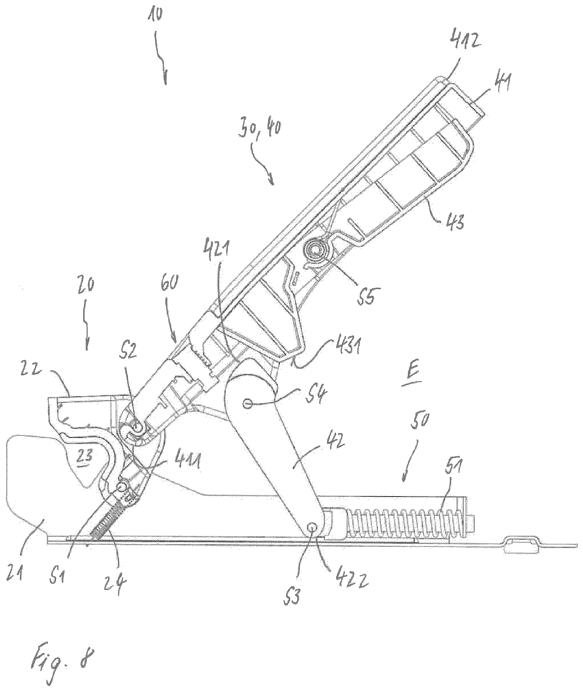

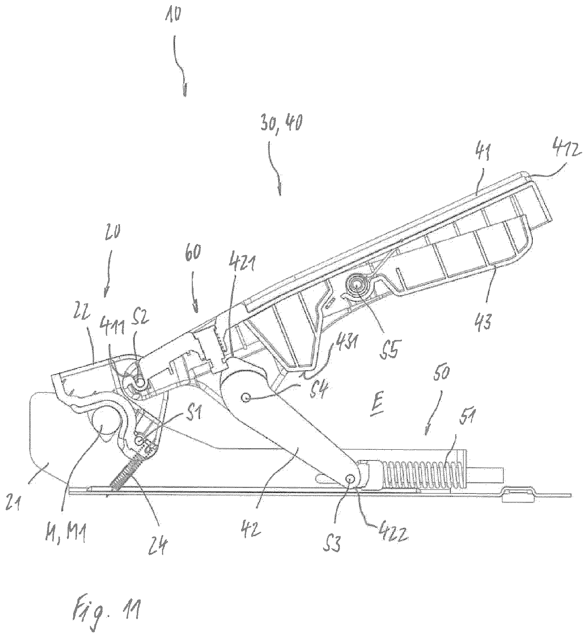

Die Trageinheit 10 ist im Detail in den Fig. 2 bis 13 gezeigt.

Die Trageinheit 10 weist eine Halteeinrichtung 20 und eine Spanneinrichtung 30 auf. Bei der gezeigten Ausführungsform weist die Trageinheit 10 zudem eine Ausgleichseinrichtung 50 und ein abschließbares Schloss 60 auf. Die Ausgleichseinrichtung 50 und das abschließbare Schloss 60 sind optional und nicht bei sämtlichen Ausführungsformen vorhanden.

Die Halteeinrichtung 20 ist dazu eingerichtet, einen an der Fahrradgabel G montierten Montageabschnitt M zu halten. Bei dem Montageabschnitt M handelt es sich vorliegend um eine Steckachse, die zwecks Transports des Fahrrads F anstelle eines Vorderrads an der Fahrradgabel G montiert ist.

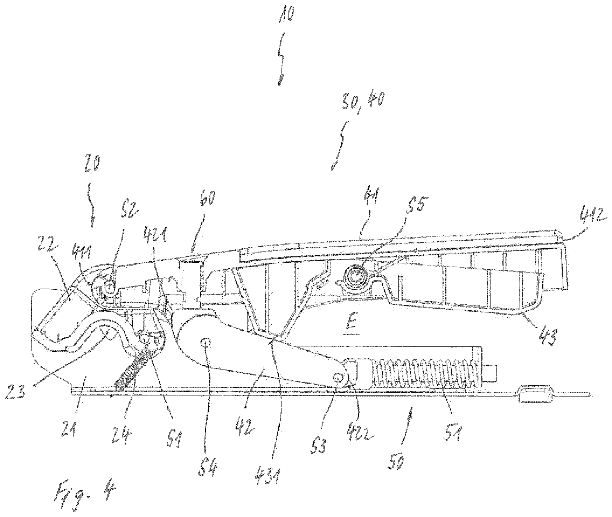

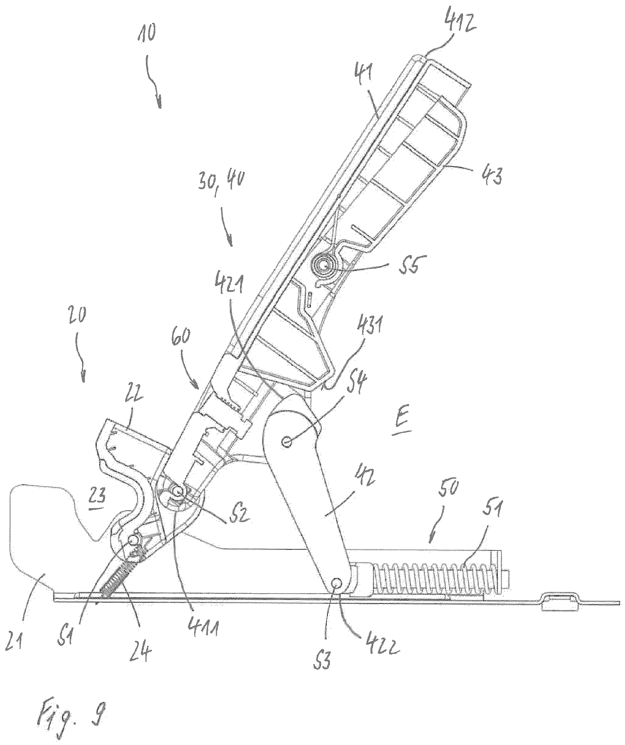

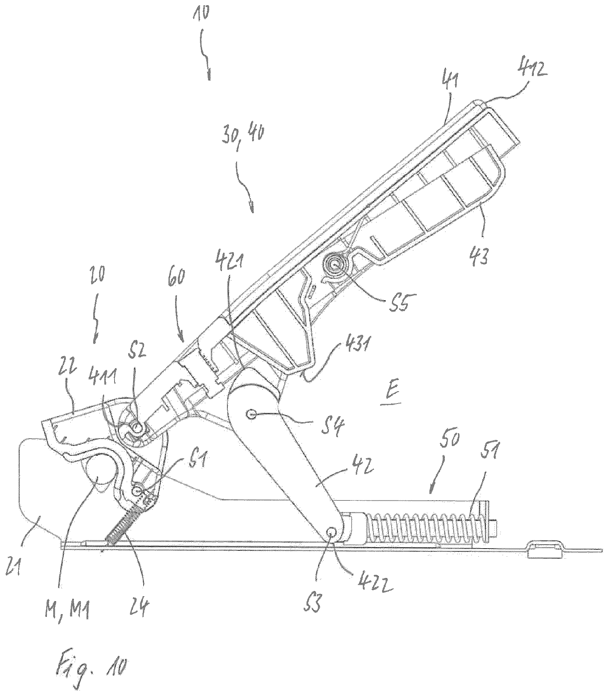

Die Halteeinrichtung 20 weist ein feststehendes Halteelement 21, ein bewegliches Halteelement 22 und eine zwischen dem feststehenden Halteelement 21 und dem beweglichen Halteelement 22 ausgebildete Halteaussparung 23 auf. Die Halteaussparung 23 dient der Aufnahme des besagten Montageabschnitts M (siehe insbesondere Fig. 10 bis 13). Das bewegliche Halteelement 22 ist zum Öffnen und Schließen der Halteaussparung 23 relativ zu dem feststehenden Halteelement 21 beweglich. In einem geöffneten Zustand der Halteaussparung 23 (siehe Fig. 9) nimmt das bewegliche Halteelement 22 eine Öffnungsstellung ein und umgekehrt. In einem geschlossenen Zustand der Halteaussparung 23 (siehe Fig. 4) nimmt das bewegliche Halteelement 22 eine Haltestellung ein und umgekehrt.

Bei der gezeigten Ausführungsform ist das feststehende Halteelement 21 und/oder das bewegliche Halteelement 22 aus einem Kunststoffwerkstoff gefertigt.

Bei einer weiteren Ausführungsform ist wenigstens das feststehende Halteelement aus Metall gefertigt. In diesem Fall ist das feststehenden Halteelement vorzugsweise mit einer formnachgiebigen und/oder elastischen Einlage versehen, über welche der Montageabschnitt mittelbar an dem feststehenden Halteelement abgestützt ist, wobei die Einlage beispielsweise aus einem Kunststoffwerkstoff oder dergleichen gefertigt ist. Durch die formnachgiebige und/oder elastische Einlage kann einer Beschädigung des Montageabschnitts, im Speziellen der Steckachse, durch das metallische feststehende Halteelement vorgebeugt werden. Sofern auch das bewegliche Halteelement aus Metall gefertigt ist, kann auch dort eine solche Einlage vorgesehen sein.

Die Spanneinrichtung 30 ist dazu eingerichtet, das bewegliche Halteelement 22 zwischen der Öffnungsstellung (Fig. 9) und der Haltestellung (Fig. 4) zu bewegen. Die Spanneinrichtung 30 ist zudem dazu eingerichtet, das bewegliche Halteelement 22 in der Haltestellung (Fig. 4) zu verriegeln.

Bei einer in den Figuren nicht gezeigten Ausführungsform mit zueinander relativbeweglichen Halteelementen ist die Spanneinrichtung zur Relativbewegung der beiden Halteelemente und zum Verriegeln der beiden Halteelemente in der Haltestellung eingerichtet.

Die Spanneinrichtung 30 weist einen Kniehebelmechanismus 40 auf, der mit dem beweglichen Halteelement 22 wirkverbunden und in einer Bewegungsebene E (Zeichenebene der Fig. 4 bis 13) beweglich ist. Der Kniehebelmechanismus 40 dient dem Bewegen und dem Verriegeln der Halteeinrichtung 20. Der Kniehebelmechanismus 40 weist folglich eine vorteilhafte Mehrfachfunktion auf. Gegenüber aus dem Stand der Technik bekannten Trageinheiten mit einer gesonderten Bewegungseinrichtung und einer gesonderten Verriegelungseinrichtung werden daher ein vereinfachter Aufbau und eine vereinfachte Bedienung erreicht.

Bei der gezeigten Ausführungsform ist die Halteeinrichtung 20, genauer: das bewegliche Halteelement 22, in der Bewegungsebene E des Kniehebelmechanismus 40 zwischen der Haltestellung und der Öffnungsstellung beweglich. Bei einer in den Figuren nicht gezeigten Ausführungsform erfolgt die Bewegung der Halteeinrichtung in einer weiteren Bewegungsebene, die vorzugsweise orthogonal zu der Bewegungsebene des Kniehebelmechanismus ist.

Bei der gezeigten Ausführungsform ist das bewegliche Halteelement 22 relativ zu dem feststehenden Halteelement 21 um eine erste Schwenkachse S1 zwischen der Haltestellung und der Öffnungsstellung schwenkbeweglich. Die Schwenkbewegung erfolgt in der Bewegungsebene E des Kniehebelmechanismus 40. Die erste Schwenkachse S1 ist orthogonal zu der Bewegungsebene E. Das bewegliche Halteelement 22 ist mittels der ersten Schwenkachse S1 an dem feststehenden Halteelement 21 gelagert. Das bewegliche Halteelement 22 ist folglich unmittelbar mit dem feststehenden Halteelement 21 verbunden/an diesem gelagert. Bei einer in den Figuren nicht gezeigten Ausführungsform ist das bewegliche Halteelement an einem fest mit dem feststehenden Halteelement verbundenen Bauteil und/oder Abschnitt gelagert, so dass in diesem Fall auch von einer mittelbaren oder indirekten Befestigung des beweglichen Halteelements an dem feststehenden Halteelement gesprochen werden kann.

Bei in den Figuren nicht gezeigten Ausführungsformen ist anstelle oder zusätzlich zu der Schwenkbeweglichkeit des beweglichen Halteelements eine translatorische Beweglichkeit vorgesehen. Bei solchen Ausführungsformen ist das bewegliche Halteelement mittels der Spanneinrichtung, genauer: dem Kniehebelmechanismus, translatorisch zwischen der Haltestellung und der Öffnungsstellung beweglich, beispielsweise parallel oder orthogonal zu der Längsrichtung der Tragschiene.

Bei der gezeigten Ausführungsform ist das bewegliche Halteelement 22 mittels des Kniehebelmechanismus 40 um in etwa 90° schwenkbeweglich (vgl. Fig. 4 und 9). In der Öffnungsstellung (Fig. 9) ist das bewegliche Halteelement um in etwa 90° um die erste Schwenkachse S1 relativ zu der Haltestellung verschwenkt (siehe Fig. 4). Hierdurch wird die Halteaussparung 23 in der Öffnungsstellung weit geöffnet. Diese weite Öffnung erlaubt ein einfaches Einbringen des Montageabschnitts M in die Halteaussparung 23, wobei ein Anstoßen des des Montageabschnitts M an dem (geöffneten) beweglichen Halteelement 22 vermieden wird. Bei in den Figuren nicht gezeigten Ausführungsformen kann das bewegliche Halteelement noch weiter als 90° verschwenkbar sein, beispielsweise auf zwischen 120° und 160°.

Bei der gezeigten Ausführungsform ist das bewegliche Halteelement 22 mittels eines Federelements 24 in Richtung der Öffnungsstellung vorgespannt. Das Federelement 24 greift einends an dem beweglichen Halteelement 22 an und ist andernends relativ zu dem feststehenden Halteelement 21 festgelegt. Vorliegend ist das Federelement 24 andernends unmittelbar an dem feststehenden Halteelement 21 befestigt. Das Federelement 24 greift im Bereich der ersten Schwenkachse S1 an dem beweglichen Halteelement 22 an und bewirkt ein um die erste Schwenkachse S1 wirkendes Drehmoment auf das bewegliche Haltelement 22. In Bezug auf die Zeichenebene der Fig. 4 bis 13 wirkt das Drehmoment im Uhrzeigersinn um die erste Schwenkachse S1. In der Öffnungsstellung (Fig. 9) ist das Federelement 24 entspannt oder weniger stark gespannt als in der Haltestellung (Fig. 4).

Bei der gezeigten Ausführungsform weist der Kniehebelmechanismus 40 einen Betätigungshebel 41 und einen Stützhebel 42 auf.

Der Betätigungshebel 41 ist um eine zweite Schwenkachse S2 relativ zu dem beweglichen Halteelement 22 schwenkbeweglich an dem beweglichen Halteelement 22 gelagert. Der Stützhebel 42 ist um eine dritte Schwenkachse S3 relativ zu dem feststehenden Halteelement 21 schwenkbeweglich und mit dem feststehenden Halteelement 21 (unmittelbar oder mittelbar) verbunden. Der Betätigungshebel 41 und der Stützhebel 42 sind um eine vierte Schwenkachse S4 relativ zueinander schwenkbeweglich aneinander gelagert.

Die zweite Schwenkachse S2, die dritte Schwenkachse S3 und die vierte Schwenkachse S4 sind zueinander parallel und orthogonal zu der Bewegungsebene E.

Bei der gezeigten Ausführungsform ist die zweite Schwenkachse S2 einends des Betätigungshebels 41 angeordnet. Die dritte Schwenkachse S3 ist einends des Stützhebels 42 angeordnet und die vierte Schwenkachse S4 ist andernends des Stützhebels 42 angeordnet. In Bezug auf eine nicht näher bezeichnete Längsachse des Betätigungshebels 42 ist die vierte Schwenkachse S4 von der zweiten Schwenkachse S2 beabstandet.

Bei der gezeigten Ausführungsform ist der Betätigungshebel 41 zwischen einem ersten Ende 411 und einem zweiten Ende 412 längserstreckt. Der Betätigungshebel 41 ist vorliegend im Wesentlichen gerade längserstreckt. Das erste Ende 411 ist der Halteeinrichtung 20 zugewandt und mittels der zweiten Schwenkachse S2 schwenkbeweglich an dem beweglichen Halteelement 22 gelagert. Die zweite Schwenkachse S2 ist im Bereich des ersten Endes 411 an dem Betätigungshebel 41 angeordnet. Das zweite Ende 412 ist der Halteeinrichtung 20 abgewandt.

Bei der gezeigten Ausführungsform ist der Stützhebel 42 zwischen einem ersten Ende 421 und einem zweiten Ende 422 längserstreckt. Vorliegend ist das erste Ende 421 der Halteeinrichtung 20 zugewandt und das zweite Ende 422 ist der Halteeinrichtung 20 abgewandt. Die vierte Schwenkachse S4 ist im Bereich des ersten Endes 421 an dem Stützhebel 42 angeordnet. Das erste Ende 421 ist mittels der vierten Schwenkachse S4 schwenkbeweglich an dem Betätigungshebel 41 gelagert. Dabei liegt die vierte Schwenkachse S4 in Bezug auf den Betätigungshebel 41 zwischen dessen erstem Ende 411 und dessen zweitem Ende 412. Die dritte Schwenkachse S3 ist im Bereich des zweiten Endes 422 an dem Stützhebel 42 angeordnet. Das zweite Ende 422 des Stützhebels 42 ist mittels der dritten Schwenkachse S3 mit dem feststehenden Halteelement 21 schwenkbeweglich (mittelbar oder unmittelbar) verbunden.

Um die Halteaussparung 23 ausgehend von der Öffnungsstellung (Fig. 9) in die Haltestellung (Fig. 4) zu verlagern, d.h. zu schließen, wird der Betätigungshebel 41 ausgehend von der in Fig. 9 gezeigten Konfiguration im Uhrzeigersinn um die zweite Schwenkachse S2 verlagert. Bei der gezeigten Ausführungsform ragt der Betätigungshebel 41 in der Öffnungsstellung überwiegend vertikal nach oben. Entsprechendes gilt, mutatis mutandis, für den Stützhebel 42. Bei einer solchen Bewegung des Betätigungshebels 41 im Uhrzeigersinn um die zweite Schwenkachse S2 bewegt sich der Stützhebel 42 entgegen dem Uhrzeigersinn um die dritte Schwenkachse S3. In Bezug auf die vierte Schwenkachse S4 bewegt sich der Betätigungshebel 41 im Uhrzeigersinn, der Stützhebel 42 entgegen dem Uhrzeigersinn. Bei einer solchen Bewegung wird gleichzeitig das bewegliche Halteelement 22 entgegen dem Uhrzeigersinn um die erste Schwenkachse S1 verschwenkt. In der Haltestellung (Fig. 4) sind der Betätigungshebel 41 und der Stützhebel 42 überwiegend horizontal ausgerichtet.

Zum Öffnen der Halteaussparung 23 ausgehend von der Haltestellung (Fig. 4) erfolgt die Bewegung des Kniehebelmechanismus 40 in einer kinematisch umgekehrten Weise.

In der Haltestellung (Fig. 4) ist der Kniehebelmechanismus 40 überstreckt. Die Überstreckung des Kniehebelmechanismus 40 bewirkt eine Verriegelung der Halteeinrichtung 20, genauer: des beweglichen Halteelements 22, in der Haltestellung. Überstreckt meint, dass der Kniehebelmechanismus 40 ausgehend von der Öffnungsstellung in Richtung der Haltestellung über einen Totpunkt hinwegbewegt ist. Als Totpunkt kann diejenige Konfiguration des Kniehebelmechanismus 40 verstanden werden, in welcher eine weitergehende Bewegung des Betätigungshebels 41 in Richtung der Haltestellung keine weitergehende Bewegung des beweglichen Haltelements 22 in Richtung der Haltestellung bewirkt. Vorliegend ist der Totpunkt dann erreicht, wenn die zweite Schwenkachse S2, die dritte Schwenkachse S3 und die vierte Schwenkachse S4 innerhalb der Bewegungsebene E auf einer Geraden liegen. Sobald die vierte Schwenkachse S4 in Richtung der Haltestellung über eine gedachte Verbindungsgerade zwischen der zweiten Schwenkachse S2 und der dritten Schwenkachse S3 hinwegbewegt wird, erfolgt eine Überstreckung des Kniehebelmechanismus 40. Eine solche Überstreckung ist beispielsweise in Fig. 4 gezeigt.

Beim Öffnen und Schließen der Halteaussparung 23 verbleibt die erste Schwenkachse S1 innerhalb der Bewegungsebene E stets ortsfest. Die zweite Schwenkachse S2 und die vierte Schwenkachse S4 sind dabei innerhalb der Bewegungsebene E verlagerbar. Die zweite Schwenkachse S2 bewegt sich auf einer kreisbogenförmigen Bewegungsbahn um die erste Schwenkachse S1. Die vierte Schwenkachse S4 bewegt sich auf einer kreisbogenförmigen Bewegungsbahn um die dritte Schwenkachse S3.

Bei der gezeigten Ausführungsform ist auch die dritte Schwenkachse S3 (erforderlichenfalls) innerhalb der Bewegungsebene E verlagerbar. Dies auf noch näher beschriebene Weise. Bei einer in den Figuren nicht gezeigten Ausführungsform ist die dritte Schwenkachse in Bezug auf die Bewegungsebene stets ortsfest.

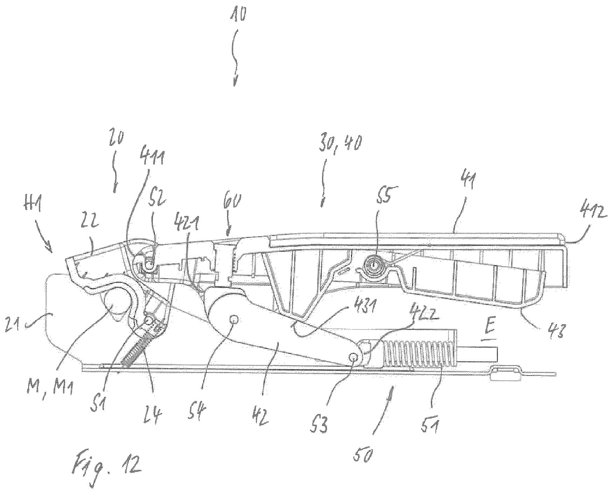

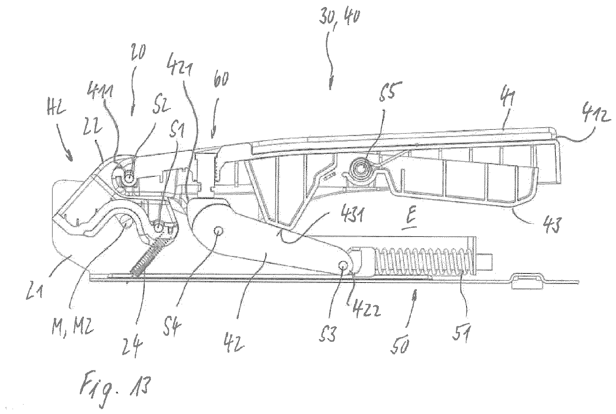

Bei der gezeigten Ausführungsform ist die besagte Ausgleichseinrichtung 50 vorhanden. Die Ausgleichseinrichtung 50 ermöglicht die eine Verlagerung der dritten Schwenkachse S3 innerhalb der Bewegungsebene E. Durch die Ausgleichseinrichtung 50 ist der Kniehebelmechanismus 40 relativ zu dem feststehenden Halteelement 21 in der Bewegungsebene E begrenzt translatorisch beweglich elastisch abgestützt. Diese elastische Abstützung bewirkt einen Größenausgleich, der ein Verriegeln des beweglichen Halteelements 22 zum Halten unterschiedlich großer Montageabschnitte M1, M2 in unterschiedlich weit geschlossenen Haltestellungen H1, H2 ermöglicht (siehe Fig. 12, 13). Die Montageabschnitte M1, M2 unterschiedlicher Größe können auch als erster Montageabschnitt M1 und zweiter Montageabschnitt M2 bezeichnet werden, so dass auch von einer ersten Haltestellung H1 (Fig. 12) und einer zweiten Haltestellung H2 (Fig. 13) gesprochen werden kann. Vorliegend ist der erste Montageabschnitt M1 größer als der zweite Montageabschnitt M2. In der ersten Haltestellung H1 ist die Halteaussparung 23 weniger weit geschlossen als in der zweiten Haltestellung H2. Ungeachtet hiervon ist die Halteeinrichtung 20 sowohl in der ersten Haltestellung H1 als auch in der zweiten Haltestellung H2 mittels des Kniehebelmechanismus 40 geschlossen und verriegelt.

Die Ausgleichseinrichtung 50 ermöglicht, dass der Kniehebelmechanismus 40 sowohl in der ersten Haltestellung H1 als auch in der zweiten Haltestellung H2 überstreckt werden kann. Dies ist in den Fig. 12 und 13 gezeigt. Die vierte Schwenkachse S4 ist in der ersten Haltestellung H1 und in der zweiten Haltestellung H2 jeweils über die besagte gedachte Verbindungsgerade zwischen der zweiten Schwenkachse S2 und der dritten Schwenkachse S3 hinwegbewegt (Überstreckung).

Die Ausgleichseinrichtung 50 weist bei der gezeigten Ausführungsform wenigstens eine Ausgleichsfeder 51 auf. Vorliegend sind zwei Ausgleichsfedern vorgesehen, wobei in den Figuren lediglich eine/die Ausgleichsfeder 51 ersichtlich ist. Die Ausgleichsfeder 51 greift einends an dem Kniehebelmechanismus 40 an und ist andernends relativ zu dem feststehenden Halteelement 21 fest abgestützt. Die Ausgleichsfeder 51 ist in der Bewegungsebene E elastisch beweglich.

Bei der gezeigten Ausführungsform ist die Ausgleichsfeder 51 eine Wendelfeder. Die Ausgleichsfeder 51 ist vorliegend im Wesentlichen horizontal innerhalb der Bewegungsebene E orientiert. In der Haltestellung (Fig. 4, 12, 13) sind der Stützhebel 42 und die Haltefeder 51 im Wesentlichen parallel längserstreckt.

Bei einer in den Figuren nicht gezeigten Ausführungsform ist die Ausgleichsfeder ausgehend von der besagten horizontalen Orientierung geneigt längserstreckt. Im Speziellen ist die Ausgleichsfeder in Richtung des zweiten Endes des Stützhebels nach oben geneigt. Die Neigung kann dabei bis zu 20° betragen.

Bei der gezeigten Ausführungsform ist der Kniehebelmechanismus 40 über den Stützhebel 42 an der Ausgleichseinrichtung 50 abgestützt. Im Speziellen ist das zweite Ende 422 des Stützhebels 42 über die dritte Schwenkachse S3 an der Ausgleichseinrichtung 50 befestigt und auf diese Weise elastisch in Relation zu dem feststehenden Halteelement 21 abgestützt. Diese elastische Abstützung ermöglicht eine translatorische Ausgleichsbewegung der dritten Schwenkachse S3 innerhalb der Bewegungsebene E. Zwecks Führung der besagten Ausgleichsbewegung ist die dritte Schwenkachse S3 bei der gezeigten Ausführungsform an einer Führungsnut 211 geführt (siehe Fig. 2). Die Führungsnut 211 ist vorliegend an dem feststehenden Halteelement 21 ausgebildet und horizontal längserstreckt.

In der ersten Haltestellung H1 (Fig. 12) nimmt die dritte Schwenkachse S3 innerhalb der Bewegungsebene E eine erste Position ein (ohne Bezugszeichen). In der zweiten Haltestellung H2 (Fig. 13) nimmt die dritte Schwenkachse S3 eine zweite Position ein. In der ersten Position ist die dritte Schwenkachse S3 weiter von der Halteaussparung 23 entfernt als in der zweiten Position. Die Ausgleichsfeder 51 ist in der ersten Haltestellung H1 stärker gestaucht als in der zweiten Haltestellung H2.

Bei der gezeigten Ausführungsform weist der Kniehebelmechanismus 40 zudem einen Fixierhebel 43 auf. Der Fixierhebel 43 ist um eine fünfte Schwenkachse S5 relativ zu dem Betätigungshebel 41 schwenkbeweglich an dem Betätigungshebel 41 gelagert. Die fünfte Schwenkachse S5 ist orthogonal zu der Bewegungsebene E, so dass der Fixierhebel 43 innerhalb der Bewegungsebene E schwenkbeweglich ist. Der Fixierhebel 43 weist einen Anschlagabschnitt 431 auf. In der Haltestellung (Fig. 4, 12, 13) drückt der Anschlagabschnitt 431 auf den Stützhebel 42. Hierdurch wird eine Fixierung der Beweglichkeit des Kniehebelmechanismus 40 erreicht. Durch diese Fixierung wird vermieden, dass der Kniehebelmechanismus 40 ungewollt in Richtung der Öffnungsstellung verlagert wird, d.h. entriegelt wird. Durch den Kontakt mit dem Anschlagabschnitt 431 ist der Stützhebel 42 an einer im Uhrzeigersinn gerichteten Schwenkbewegung um die dritte Schwenkachse S3 gehindert. Zum Aufheben der Fixierung kann der Anschlagabschnitt 431 von dem Stützhebel 42 abgehoben werden. Dieses Abheben des Anschlagabschnitts 431 erfolgt mittels einer entgegen dem Uhrzeigersinn gerichteten Schwenkbewegung des Fixierhebels 43 um die fünfte Schwenkachse S5.

Bei der gezeigten Ausführungsform drückt der Anschlagabschnitt 431 zwischen dem ersten Ende 421 und dem zweiten Ende 422 auf den Stützhebel 42. Dieser Kontakt bewirkt ein entgegen dem Uhrzeigersinn um die dritte Schwenkachse S3 und im Uhrzeigersinn um die vierte Schwenkachse S4 gerichtetes Drehmoment (Biegemoment) auf den Stützhebel 42.

Bei der gezeigten Ausführungsform weist die Spanneinrichtung 30 zudem ein abschließbares Schloss 60 auf. Das Schloss 60 ist vorliegend an dem Betätigungshebel 41 angeordnet und wirkt in einem abgeschlossenen Zustand mit dem Stützhebel 42 zusammen. Durch ein Abschließen des Schlosses in der Haltestellung werden der Betätigungshebel 41 und der Stützhebel 42 mittels des Schlosses 60 lösbar fest miteinander verbunden. Im abgeschlossenen Zustand blockiert das Schloss 60 die Beweglichkeit des Kniehebelmechanismus 40. Durch das abschließbare Schloss 60 kann ein unautorisiertes Öffnen der Halteeinrichtung 20 und damit ein Diebstahl des Fahrrads F verhindert werden.

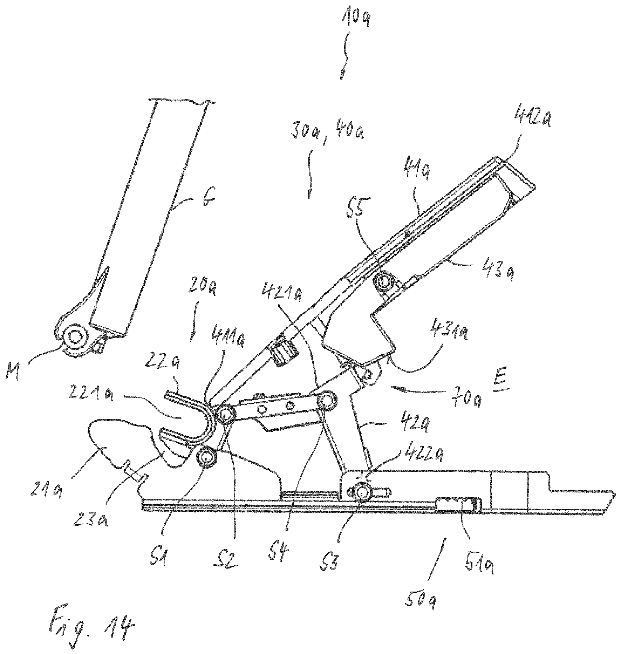

In den Fig. 14 bis 17 ist eine weitere Ausführungsform einer erfindungsgemäßen Trageinheit 10a gezeigt. Die Trageinheit 10a nach den Fig. 14 bis 17 ist im Hinblick auf ihre Gestaltung und Funktion im Wesentlichen identisch mit der Trageinheit 10 nach den Fig. 2 bis 13. Zur Vermeidung von Wiederholungen wird daher nachfolgend in erster Linie auf wesentliche Unterschiede der Trageinheit 10a gegenüber der Trageinheit 10 eingegangen. Im Übrigen gilt, sofern nichts anderes beschrieben ist, das in Bezug auf die Trageinheit 10 nach den Fig. 2 bis 13 Offenbarte, mutatis mutandis, auch für die Trageinheit 10a nach den Fig. 14 bis 17. Funktionsgleiche Bauteile und/oder Abschnitte sind mit identischen Bezugszeichenziffern unter Hinzufügung des Kleinbuchstabens "a" bezeichnet.

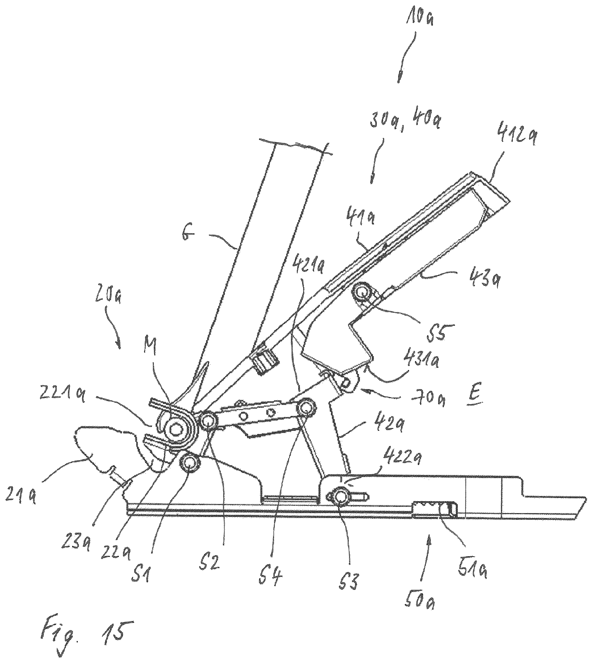

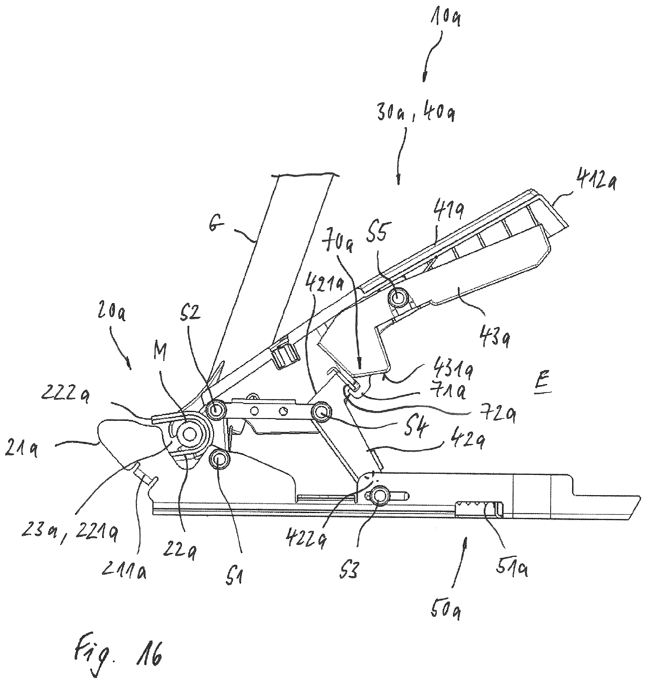

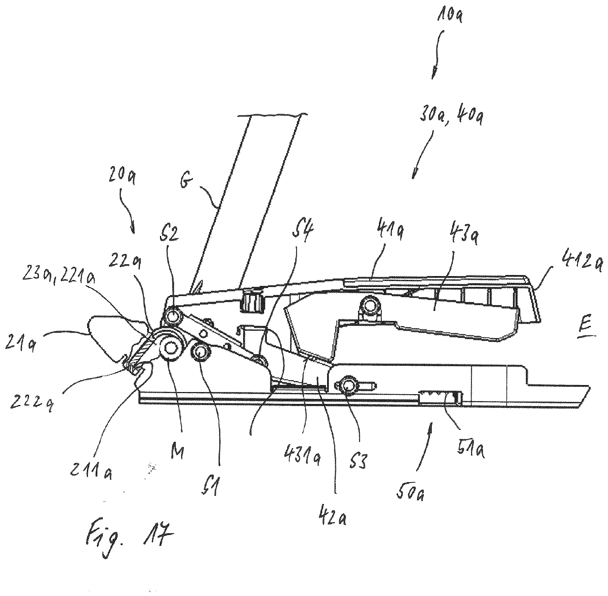

Im Unterschied zu der Trageinheit 10 nach den Fig. 2 bis 13 weist die Trageinheit 10a nach den Fig. 14 bis 17 eine weitere definierte Stellung der Halteeinrichtung 20a und damit auch der Spanneinrichtung 30a sowie des Kniehebelmechanismus 40a auf. Diese definierte Stellung wird als Ruhestellung bezeichnet und ist in Fig. 16 gezeigt. Das bewegliche Halteelement 22a ist ausgehend von der Öffnungsstellung (siehe Fig. 14, 15) in die Ruhestellung beweglich. In der Ruhestellung ist die Halteaufnahme 23a wenigstens teilweise und/oder weniger weit als in der Haltestellung (siehe Fig. 17) geschlossen. Dabei ist der Kniehebelmechanismus 40a in der Ruhestellung mittels einer Arretiereinrichtung 70a gegen eine ungewollte Verlagerung des beweglichen Halteelements 22a in Richtung der Öffnungsstellung lösbar arretiert.

Die Ruhestellung kann alternativ auch als (Vor-)Fixierstellung bezeichnet werden und dient einer vorübergehenden, sicheren Vorfixierung des zu befestigenden Fahrrads F. In der Ruhestellung ist der Montageabschnitt M sicher in der Halteeinrichtung 20a gehalten, wobei die Ruhestellung aber nicht einer dauerhaften Befestigung und Verwendung im Fahrbetrieb des Fahrzeugs dient (keine Transportbefestigung). Die Ruhestellung erlaubt einen vereinfachten und besonders sicheren Befestigungsvorgang, da der Montageabschnitt M bereits vor Erreichen der Haltestellung, nämlich in der Ruhestellung, vorfixiert wird. Durch diese Vorfixierung wird vermieden, dass das Fahrrad F, beispielsweise durch eine Unachtsamkeit des Bedieners, während der Befestigung noch vor Erreichen der Haltestellung umkippt und Schäden oder Verletzungen verursachen kann.

Bei der gezeigten Ausführungsform ist das bewegliche Halteelement 22a unter Einwirkung einer Gewichtskraft der zu haltenden Fahrradgabel G ausgehend von der Öffnungsstellung in die Ruhestellung verlagerbar. Es ist folglich keine zusätzliche Einwirkung durch den Bediener erforderlich, um eine Verlagerung in die Ruhestellung zu bewirken. Ausreichend ist allein die Einwirkung der Fahrradgabel G, genauer: deren Gewichtskraft, auf das bewegliche Halteelement 22a. Ausgehend von der Öffnungsstellung, wie sie in Fig. 15 gezeigt ist, wird das bewegliche Halteelement 22a unter Einwirkung der Gewichtskraft der Fahrradgabel G mittels des Montageabschnitts M entgegen dem Uhrzeigersinn um die erste Schwenkachse S1 bis in die Ruhestellung verschwenkt (Fig. 16). Eine für diesen Zweck ausreichend leichtgängige Beweglichkeit kann beispielsweise durch eine entsprechende Dimensionierung der Hebelverhältnisse des Kniehebelmechanismus 40a erreicht werden.

Die Halteaufnahme 23a ist auch bei der Trageinheit 10a zwischen dem beweglichen Halteelement 22a und dem feststehenden Halteelement 21a ausgebildet. In der Haltestellung (Fig. 17) ist der Montageabschnitt M in der Halteaufnahme 23a und damit zwischen dem feststehenden Halteelement 21a und dem beweglichen Halteelement 22a gehalten. In der Ruhestellung (Fig. 16) gilt dies ebenfalls. Allerdings ist die Halteaufnahme 23a in der Ruhestellung erkennbar weniger weit geschlossen als in der Haltestellung. Zudem ist der Kniehebelmechanismus 40a in der Ruhestellung, anders als in der Haltestellung, nicht überstreckt. Vielmehr ist die kinematische Konfiguration des Kniehebelmechanismus 40a in der Ruhestellung nur geringfügig unterschiedlich von der kinematischen Konfiguration in der Öffnungsstellung.

Um in der Öffnungsstellung eine ausreichende Kraftübertragung von dem Montageabschnitt M auf das bewegliche Halteelement 22a zu ermöglichen, weist Letzteres bei der gezeigten Ausführungsform eine Aufnahmeaussparung 221a auf. Die Aufnahmeaussparung 221a ist im Querschnitt rinnenförmig und umgreift den Montageabschnitt M in Umfangsrichtung. In der Öffnungsstellung ist die Aufnahmeaussparung 221a horizontal nach vorne und vertikal nach oben ausgerichtet, so dass der Montageabschnitt M von vorne nach hinten und von oben nach unten in die Aufnahmeaussparung 221a eingesetzt werden kann. Die Aufnahmeaussparung 221a gewährleistet, dass die Gewichtskraft der Fahrradgabel G das bewegliche Halteelement 22a um die erste Schwenkachse S1 in Richtung der Ruhestellung bewegen kann. Dabei liegt ein Kraftangriffspunkt der Gewichtskraft innerhalb der Aufnahmeaussparung 221a um einen horizontalen Hebelarm beabstandet von der ersten Schwenkachse S1. Dieser Hebelarm bewirkt, dass das bewegliche Halteelement 22a unter Einwirkung der Gewichtskraft der Fahrradgabel G entgegen dem Uhrzeigersinn um die erste Schwenkachse S1 gedrückt wird.

Bei der gezeigten Ausführungsform weist die Arretiereinrichtung 70a einen ersten Arretierabschnitt 71a und einen zweiten Arretierabschnitt 72a auf. In der Ruhestellung wirken der erste Arretierabschnitt 71a und der zweite Arretierabschnitt 72a in Richtung der Öffnungsstellung formschlüssig zusammen. In der Richtung der Haltestellung liegt kein Formschluss zwischen dem ersten Arretierabschnitt 71a und dem zweiten Arretierabschnitt 72a vor.

Bei der gezeigten Ausführungsform ist der erste Arretierabschnitt 71a fest mit dem Fixierhebel 43a verbunden und gemeinsam mit diesem beweglich. Im Speziellen ist der erste Arretierabschnitt 71a ein integraler Abschnitt des Fixierhebels 43a.

Bei der gezeigten Ausführungsform ist der zweite Arretierabschnitt 72a fest mit dem Stützhebel 42a verbunden und gemeinsam mit diesem beweglich. Im Speziellen ist der zweite Arretierabschnitt 72a ein integraler Abschnitt des Stützhebels 42a.

Der erste Arretierabschnitt 71a ist bei der gezeigten Ausführungsform im Bereich des Anschlagabschnitts 431a angeordnet. Der erste Arretierabschnitt 71a ist in Form eines Hakens gestaltet. Der zweite Arretierabschnitt 72a ist komplementär zu dem Haken in Form eines Hinterschnitts gestaltet. Dabei hintergreift der erste Arretierabschnitt 71a den zweiten Arretierabschnitt 72a in der Ruhestellung. Dieses Hintergreifen verhindert, dass der Betätigungshebel 41a und damit der gesamte Kniehebelmechanismus 40a ungewollt ausgehend von der Ruhestellung in Richtung der Öffnungsstellung verlagert werden kann.

Bei der gezeigten Ausführungsform ist der Formschluss zwischen dem ersten Arretierabschnitt 71a und dem zweiten Arretierabschnitt 72a mittels einer Betätigung des Fixierhebels 43a aufhebbar. Zu diesem Zweck kann der Fixierhebel 43a ausgehend von der in Fig. 16 gezeigten Konfiguration entgegen dem Uhrzeigersinn um die fünfte Schwenkachse S5 relativ zu dem Betätigungshebel 41a verschwenkt werden. Hierdurch wird der Formschluss aufgehoben. Im Speziellen greift der erste Arretierabschnitt 71a aus dem zweiten Arretierabschnitt 72a aus.

Wie in Fig. 17 gezeigt ist, wirkt in der Haltestellung ein vorderes Stirnende 222a des beweglichen Halteelements 22a mit einem Widerlager 211a zusammen. Das Widerlager 211a ist relativ zu dem feststehenden Halteelement 21a unbeweglich. Das Widerlager 211a ist bei der gezeigten Ausführungsform durch einen Abschnitt des feststehenden Halteelements 21a gebildet.

Das vordere Stirnende 222a läuft bei einer Bewegung in Richtung der Haltestellung unter Reibung, insbesondere tangential, gegen das Widerlager 211a an. In der Haltestellung wirkt die Reibung zwischen dem vorderen Stirnende 222a und dem Widerlager 211a einer Bewegung in Richtung der Öffnungsstellung (zusätzlich) entgegen.

## Patentansprüche

1. Trageinheit (10, 10a) für einen Fahrradträger (1), aufweisend
eine Halteeinrichtung (20, 20a), die eingerichtet ist zum Halten eines an einer Fahrradgabel (G) montierten Montageabschnitts (M), insbesondere einer Steckachse, wobei die Halteeinrichtung (20, 20a) ein feststehendes Halteelement (21, 21a), ein bewegliches Halteelement (22, 22a) und eine zwischen dem feststehenden Halteelement (21, 21a) und dem beweglichen Halteelement (22, 22a) ausgebildete Halteaussparung (23, 23a) aufweist, und wobei das bewegliche Halteelement (22, 22a) relativ zu dem feststehenden Halteelement (21, 21a) beweglich ist zwischen einer Öffnungsstellung, in welcher die Halteaufnahme (23, 23a) zur Aufnahme des Montageabschnitts (M) geöffnet ist, und einer Haltestellung, in welcher die Halteaufnahme (23, 23a) zum Halten des Montageabschnitts (M) geschlossen ist,
**gekennzeichnet durch** eine Spanneinrichtung (30, 30a), die eingerichtet ist zum Bewegen des beweglichen Halteelements (22, 22a) zwischen der Öffnungsstellung und der Haltestellung und zum Verriegeln des beweglichen Halteelements (22, 22a) in der Haltestellung,
wobei die Spanneinrichtung (30, 30a) einen Kniehebelmechanismus (40, 40a) aufweist, der zum Bewegen und zum Verriegeln des beweglichen Halteelements (22, 22a) mit demselben wirkverbunden und innerhalb einer Bewegungsebene (E) beweglich ist.

2. Trageinheit (10, 10a) nach Anspruch 1, **dadurch gekennzeichnet, dass** der Kniehebelmechanismus (40, 40a) in der Haltestellung überstreckt ist, wobei die Verriegelung des beweglichen Halteelements (22, 22a) durch die besagte Überstreckung bewirkt ist.

3. Trageinheit (10, 10a) nach Anspruch 1 oder 2, **dadurch gekennzeichnet, dass** die Spanneinrichtung (30, 30a) eine Ausgleichseinrichtung (50, 50a) aufweist, mittels derer der Kniehebelmechanismus (40, 40a) relativ zu dem feststehenden Halteelement (21, 21a) in der Bewegungsebene (E) begrenzt translatorisch beweglich elastisch abgestützt ist, wobei die elastische Abstützung einen Größenausgleich bewirkt, der ein Verriegeln des beweglichen Halteelements (22, 22a) zum Halten unterschiedlich großer Montageabschnitte (M1, M2) in unterschiedlich weit geschlossenen Haltestellungen (H1, H2) des beweglichen Halteelements (22, 22a) ermöglicht.

4. Trageinheit (10, 10a) nach Anspruch 3, **dadurch gekennzeichnet, dass** die Ausgleichseinrichtung (50, 50a) wenigstens eine in der Bewegungsebene (E) elastisch bewegliche Ausgleichsfeder (51, 51a) aufweist, die einends relativ zu dem feststehenden Halteelement (21, 21a) abgestützt ist und andernends an dem Kniehebelmechanismus (40, 40a) angreift.

5. Trageinheit (10, 10a) nach einem der vorhergehenden Ansprüche, **dadurch gekennzeichnet, dass** das bewegliche Halteelement (22, 22a) innerhalb der Bewegungsebene (E) des Kniehebelmechanismus (40, 40a) relativ zu dem feststehenden Halteelement (21, 21a) um eine erste Schwenkachse (S1) schwenkbeweglich an dem feststehenden Halteelement (21, 21a) gelagert ist, insbesondere wobei das bewegliche Halteelement (22, 22a) mittels des Kniehebelmechanismus (40, 40a) um wenigstens 60°, bevorzugt wenigstens 80°, besonders bevorzugt um wenigstens 90°, um die erste Schwenkachse (S1) schwenkbeweglich ist.

6. Trageinheit (10, 10a) nach Anspruch 5, **dadurch gekennzeichnet, dass** ein Federelement (24) an dem beweglichen Halteelement (22, 22a) angreift, wobei das bewegliche Halteelement (22, 22a) mittels des Federelements (24) in Richtung der Öffnungsstellung vorgespannt ist.

7. Trageinheit (10, 10a) nach einem der vorhergehenden Ansprüche, **dadurch gekennzeichnet, dass** der Kniehebelmechanismus (40, 40a) einen Betätigungshebel (41, 41a) und einen Stützhebel (42, 42a) aufweist,
wobei der Betätigungshebel (41, 41a) um eine zweite Schwenkachse (S2) relativ zu dem beweglichen Halteelement (22, 22a) schwenkbeweglich an dem beweglichen Halteelement (22, 22a) gelagert ist,
wobei der Stützhebel (42, 42a) um eine dritte Schwenkachse (S3) relativ zu dem feststehenden Halteelement (21, 21a) schwenkbeweglich mit dem feststehenden Halteelement (21, 21a) verbunden ist,
und wobei der Betätigungshebel (41, 41a) und der Stützhebel (42, 42a) um eine vierte Schwenkachse (S4) relativ zueinander schwenkbeweglich aneinander gelagert sind.

8. Trageinheit (10, 10a) nach Anspruch 7 und Anspruch 3, **dadurch gekennzeichnet, dass** die dritte Schwenkachse (S3) mittels der Ausgleichseinrichtung (50, 50a) relativ zu dem feststehenden Halteelement (21, 21a) in der Bewegungsebene (E) begrenzt translatorisch beweglich elastisch abgestützt ist.

9. Trageinheit (10, 10a) nach Anspruch 7 oder 8, **dadurch gekennzeichnet, dass** die zweite Schwenkachse (S2) und die dritte Schwenkachse (S3) durch eine in der Bewegungsebene (E) erstreckte gedachte Verbindungsgerade miteinander verbunden sind, wobei bei einer Bewegung von der Öffnungsstellung in die Haltestellung die vierte Schwenkachse (S4) sich über die Verbindungsgerade hinwegbewegt, wodurch eine Überstreckung des Kniehebelmechanismus (40, 40a) bewirkt ist.

10. Trageinheit (10, 10a) nach einem der Ansprüche 7 bis 9, **dadurch gekennzeichnet, dass** der Kniehebelmechanismus (40, 40a) einen Fixierhebel (43, 43a) aufweist,
wobei der Fixierhebel (43, 43a) um eine fünfte Schwenkachse (S5) relativ zu dem Betätigungshebel (41, 41a) schwenkbeweglich an dem Betätigungshebel (41, 41a) gelagert ist und einen Anschlagabschnitt (431, 431a) aufweist,
wobei der Anschlagabschnitt (431, 431a) in der Haltestellung zur Fixierung des Kniehebelmechanismus (40, 40a) auf den Stützhebel (42, 42a) drückt,
und wobei der Anschlagabschnitt (431, 431a) mittels einer Schwenkbewegung des Fixierhebels (43, 43a) um die fünfte Schwenkachse (S5) zum Aufheben der Fixierung von dem Stützhebel (42, 42a) abhebbar ist.

11. Trageinheit (10, 10a) nach einem der Ansprüche 7 bis 10, **dadurch gekennzeichnet, dass** die Spanneinrichtung (30, 30a) ein abschließbares Schloss (60) aufweist, wobei das Schloss (60) an dem Betätigungshebel (41, 41a) angeordnet ist und in einem abgeschlossenen Zustand mit dem Stützhebel (42, 42a) zusammenwirkt, um die Beweglichkeit des Kniehebelmechanismus (40, 40a) zu blockieren.

12. Trageinheit (10a) nach einem der vorhergehenden Ansprüche, **dadurch gekennzeichnet, dass** das bewegliche Halteelement (22a) ausgehend von der Öffnungsstellung in eine Ruhestellung beweglich ist, in welcher die Halteaufnahme (23a) zum, insbesondere vorübergehenden, Halten des Montageabschnitts (M) wenigstens teilweise und/oder weniger weit als in der Haltestellung geschlossen ist, und in welcher der Kniehebelmechanismus (40a) mittels einer Arretiereinrichtung (70a) gegen eine ungewollte Verlagerung des beweglichen Halteelements (22a) in Richtung der Öffnungsstellung lösbar arretiert ist.

13. Trageinheit (10a) nach Anspruch 12, **dadurch gekennzeichnet, dass** das bewegliche Halteelement (22a) unter Einwirkung einer Gewichtskraft der zu haltenden Fahrradgabel (G) ausgehend von der Öffnungsstellung in die Ruhestellung verlagerbar ist.

14. Trageinheit (10a) nach Anspruch 13 und Anspruch 10, wobei die Arretiereinrichtung (70a) einen fest mit dem Fixierhebel (43a) verbundenen ersten Arretierabschnitt (71a) und einen fest mit dem Stützhebel (42a) verbundenen zweiten Arretierabschnitt (72a) aufweist, wobei der erste Arretierabschnitt (71a) und der zweite Arretierabschnitt (72a) in der Ruhestellung in Richtung der Öffnungsstellung formschlüssig zusammenwirken, insbesondere wobei der Formschluss mittels einer Betätigung des Verriegelungshebels (43a) und/oder einer Schwenkbewegung des Fixierhebels (43a) um die fünfte Schwenkachse (S5) aufhebbar ist.

15. Fahrradträger (1) mit einer Trageinheit (10, 10a) nach einem der vorhergehenden Ansprüche.
